# EUROPÄISCHE PATENTSCHRIFT

(11) **EP 3 259 494 B1**
(45) Veröffentlichungstag und Bekanntmachung des Hinweises auf die Patenterteilung: **12.12.2018**
(21) Anmeldenummer: 16701043.8
(22) Anmeldetag: 20.01.2016
(51) Int. Cl.: F16H 3/089

(54) **DOPPELKUPPLUNGSGETRIEBE FÜR EIN KRAFTFAHRZEUG**
DUAL CLUTCH TRANSMISSION FOR A MOTOR VEHICLE
BOÎTE DE VITESSES À DOUBLE EMBRAYAGE POUR VÉHICULE À MOTEUR

(30) Priorität: 19.02.2015 DE 102015002134
(43) Veröffentlichungstag der Anmeldung: 27.12.2017
(73) Patentinhaber: Audi AG, 85045 Ingolstadt (DE)
(72) Erfinder: HUMMEL, Steffen, 85055 Ingolstadt (DE)
(86) Internationale Anmeldenummer: PCT/EP2016/051110
(87) Internationale Veröffentlichungsnummer: WO 2016/131594

(56) Entgegenhaltungen:
- DE-A1-102011 089 167
- DE-A1-102012 013 248
- DE-A1-102012 217 027

## Beschreibung

Die vorliegende Erfindung betrifft ein Doppelkupplungsgetriebe für ein Kraftfahrzeug gemäß dem Oberbegriff des Patentanspruchs 1.

Derartige Doppelkupplungsgetriebe haben neben einem guten Wirkungsgrad unter anderem den Vorteil, dass sie ohne Unterbrechung der Zugkraft insbesondere automatisiert schaltbar sind, wobei im jeweils nicht aktivierten Teilgetriebe bereits eine Gangstufe vorwählbar ist, die dann durch Wechsel der lastschaltbaren Kupplungen aktiviert wird. Dabei sind im einen Teilgetriebe die ungeraden Gänge (1, 3, 5, etc.) und im anderen Teilgetriebe die geraden Gänge (2, 4, 6, etc.) mittels entsprechender Zahnradsätze positioniert, die zum Beispiel über Synchronkupplungen mit der jeweiligen Eingangswelle oder der Abtriebswelle trieblich verbunden werden.

Die Axiallänge des Doppelkupplungsgetriebes hängt von der Anzahl von Zahnradsätzen oder Radebenen ab, die in der Axialrichtung hintereinander im Doppelkupplungsgetriebe angeordnet sind. Jede der Radebenen ist aus zumindest zwei Fest- und/oder Loszahnräder aufgebaut. Zwischen den Radebenen sind Schaltelemente angeordnet, bei deren Betätigung Vor- und Rückwärtsgänge schaltbar sind.

Ein Doppelkupplungsgetriebe weist über Schaltelemente schaltbare Zahnradsätzen auf, die insbesondere genau acht Radebenen bilden. Die Radebenen sind jeweils einem ersten Teilgetriebe und einem zweiten Teilgetriebe zugeordnet. Jedes der Teilgetriebe weist je eine Eingangswelle sowie eine gemeinsame Abtriebswelle auf. Die zueinander koaxialen Eingangswellen sind über je eine lastschaltbare Kupplung alternierend aktivierbar, wobei dem ersten Teilgetriebe die geraden Vorwärtsgänge sowie dem zweiten Teilgetriebe die ungeraden Vorwärtsgänge zugeordnet sind, die bei einer Gangschaltung über die Schaltelement schaltbar sind. Jede der Radebenen stellt dabei einen Direktgang bereit, bei dem genau eine Radebene in den durch das aktivierte Teilgetriebe verlaufenden Momentenfluß geschaltet ist.

Aus der DE 10 2012 217 027 A1 ist eine Getriebevorrichtung mit zwei mit einem Antriebsaggregat in Wirkverbindung bringbaren Eingangswellen bekannt, welches unter den Wortlaut des Oberbegriffes des Anspruchs 1 fällt. Aus der DE 10 2011 089 167 A1 ist ein Doppelkupplungsgetriebe in Vorgelegebauweise bekannt. Aus der DE 10 2012 013 248 A1 ist eine Antriebsvorrichtung für Kraftfahrzeuge bekannt.

Die Aufgabe der Erfindung besteht darin, ein Doppelkupplungsgetriebe bereitzustellen, das bei einer baulich günstigen Konstruktion größere Freiheitsgrade in der Funktionalität (Schaltstrategie) und in der Auslegung der Gangstufen aufweist.

Die Aufgabe ist durch die Merkmale des Patentanspruchs 1 gelöst. Besonders vorteilhafte Weiterbildungen und Ausgestaltungen der Erfindung sind Gegenstand der abhängigen Ansprüche.

Gemäß dem Patentanspruch 1 stellen die Radebenen zusätzlich zu den Direktgängen insgesamt vier Verwindungsgänge bereit, in denen mittels der Schaltelemente jeweils genau drei Radebenen in Reihe kombiniert im Momentenfluss geschaltet sind. Die Radebenen bilden somit in Doppelfunktion sowohl Direkt-Vorwärtsgänge als auch Verwindungs-Vorwärtsgänge. Dem jeweiligen Verwindungs-Vorwärtsgang ist - im Unterschied zu den Direkt-Vorwärtsgängen - keine eigene Radebene zugeordnet. Auf diese Weise reduziert sich trotz einer Vielzahl von schaltbaren Vorwärtsgängen die Getriebe-Baulänge in der Axialrichtung, und zwar im Vergleich zu einem Doppelkupplungsgetriebe, bei dem die Vorwärtsgänge nur als Direktgänge schaltbar sind.

Die Getriebestruktur ist so ausgelegt, dass die insgesamt vier Verwindungs-Vorwärtsgänge bei insgesamt acht Radebenen darstellbar sind. Bei der Bereitstellung der Verwindungs-Vorwärtsgänge sind bevorzugt sämtliche Radebenen des Getriebes zumindest einmal als Verwindungs-Radebene in den Momentenfluss schaltbar.

Zum Schalten der Vorwärtsgänge können in einer kompakten Getriebegestaltung genau fünf in Axialrichtung beidseitig schaltbare Schaltelemente vorgesehen sein, das heißt (SE-A, SE-B, SE-D, SE-C und SE-F). Zudem kann zumindest ein einseitig schaltbares Schaltelement (SE-G) vorgesehen sein. Von den fünf beidseitig schaltbaren Schaltelementen können genau vier Schaltelemente (nämlich SE-A, SE-B, SE-D und SE-C) koaxial zur Eingangsachse der Eingangswellen angeordnet sein. In diesem Fall kann genau ein beidseitig schaltbares Schaltelement (SE-F) auf der Abtriebswelle angeordnet sein. Die Getriebestruktur kann dabei so ausgelegt sein, dass zur Gangstellung der Vorwärtsgänge bevorzugt genau zwei der Schaltelemente (SE-A bis SE-F) betätigbar sind.

Gemäß der Erfindung weist jede Eingangswelle des Doppelkupplungsgetriebes genau ein beidseitig schaltbares Schaltelement (zum Beispiel eine Doppelsynchronkupplung) auf. Mittels des ersten Schaltelements (SE-C) wird die erste Eingangswelle mit ersten bis vierten Radebenen des ersten Teilgetriebes gekuppelt oder davon abgekuppelt. Mittels des zweiten Schaltelements (SE-A) wird dagegen die zweite Eingangswelle mit den fünften bis achten Radebenen des zweiten Teilgetriebes gekuppelt oder davon abgekuppelt.

Daher tragen die beiden koaxialen Eingangswellen keine Festzahnräder, sondern sie tragen lediglich die beiden ersten und zweiten Schaltelemente. Dadurch können die Eingangswellen im Vergleich zum obigen Stand der Technik wesentlich materialreduzierter ausgelegt werden. Zudem können mittels der ersten und zweiten Schaltelemente (SE-C und SE-A) Radebenen im jeweils aktivierten Teilgetriebe zumindest teilweise vom Momentenfluss abgekoppelt werden (das heißt stillgelegt werden), wodurch das Trägheitsmoment des aktivierten Teilgetriebes reduzierbar ist. Dies führt bei einem Schaltvorgang zu einer Verkürzung von Schaltzeiten bzw. zu einer Reduzierung des für den Schaltvorgang erforderlichen Energieaufwandes.

Das im ersten Teilgetriebe angeordnete erste Schaltelement (SE-C) kann entweder an ein, auf der ersten Eingangswelle gelagertes antriebsseitiges Loszahnrad der ersten Radebene oder an eine, auf der ersten Eingangswelle koaxial gelagerte Hohlwelle gekuppelt werden. Die auf der ersten Eingangswelle drehgelagerte, antriebsseitige Hohlwelle trägt zwei antriebsseitige Festzahnräder, die jeweils der zweiten Radebene und der dritten Radebene zugeordnet sind.

Auf der antriebsseitigen Hohlwelle des ersten Teilgetriebes ist zusätzlich ein antriebsseitiges Zahnrad der vierten Radebene lose gelagert. Das antriebsseitige Zahnrad der vierten Radebene ist über ein drittes Schaltelement (SE-D) an die antriebsseitige Hohlwelle des ersten Teilgetriebes kuppelbar.

Dem zweiten Teilgetriebe ist die, an dem ersten Teilgetriebe in der Axialrichtung unmittelbar angrenzende fünfte Radebene zugeordnet. Die fünfte Radebene weist ein antriebsseitiges Zahnrad auf, das auf der zweiten Eingangswelle drehbar gelagert ist und mittels des obigen dritten Schaltelementes (SE-D) an die antriebsseitige Hohlwelle des ersten Teilgetriebes kuppelbar ist. Auf diese Weise kann die fünfte Radebene entweder auf das erste oder auf das zweite Teilgetriebe geschaltet werden.

Wie oben erwähnt kann die zweite Eingangswelle ebenfalls genau ein zweites Schaltelement (SE-A) tragen, das zum Beispiel als eine Doppelsynchronkupplung ausgebildet ist. In diesem Fall kann in der Axialrichtung beidseitig des zweiten Schaltelementes im zweiten Teilgetriebe jeweils ein auf der zweiten Eingangswelle gelagertes antriebsseitiges Loszahnrad der achten Radebene und eine auf der zweiten Eingangswelle koaxial gelagerte antriebsseitige Hohlwelle angeordnet sein. Die antriebsseitige Hohlwelle und das obige Loszahnrad der achten Radebene können (über das zweite Schaltelement SE-A) alternierend mit der zweiten Eingangswelle kuppelbar sein. Die antriebsseitige Hohlwelle des zweiten Teilgetriebes kann bevorzugt ein antriebsseitiges Festzahnrad der siebten Radebene tragen sowie ein antriebsseitiges Loszahnrad der sechsten Radebene tragen. Zum Schalten des antriebsseitigen Loszahnrads der sechsten Radebene kann die antriebsseitige Hohlwelle des zweiten Teilgetriebes ein viertes Schaltelement (SE-B) aufweisen, mit dem im zweiten Teilgetriebe das losgelagerte antriebsseitige Zahnrad der sechsten Radebene mit der antriebsseitigen Hohlwelle des zweiten Teilgetriebes kuppelbar ist. In einer bevorzugten Ausführungsvariante kann mittels des obigen vierten Schaltelementes (SE-B) zusätzlich auch das antriebsseitige, losgelagerte Zahnrad der auf beide Teilgetriebe schaltbaren fünften Radebene an die antriebsseitige Hohlwelle des zweiten Teilgetriebes gekuppelt werden.

In einer technischen Umsetzung ist die Abtriebswelle achsparallel zur Eingangswelle angeordnet. Bevorzugt können die abtriebsseitigen Zahnräder der ersten und zweiten Radebene im ersten Teilgetriebe drehfest auf einer Hohlwelle angeordnet sein, die koaxial auf der Abtriebswelle drehbar gelagert ist. Die Abtriebswelle kann zudem ein fünftes Schaltelement (SE-F) aufweisen, mittels dem im ersten Teilgetriebe alternierend die Hohlwelle oder ein abtriebsseitiges Zahnrad der dritten Radebene mit der Abtriebswelle kuppelbar ist.

In ähnlicher Weise wie im ersten Teilgetriebe können auch im zweiten Teilgetriebe die abtriebsseitigen Zahnräder der siebten und achten Radebene drehfest auf einer abtriebsseitigen Hohlwelle angeordnet sein, die koaxial auf der Abtriebswelle drehbar gelagert ist. Die im zweiten Teilgetriebe auf der Abtriebswelle drehgelagerte Hohlwelle kann mit Hilfe eines sechsten, einseitigen Schaltelementes (SE-E) mit der Abtriebswelle gekuppelt werden.

In einer nicht von der Erfindung umfassten Vergleichsform kann das abtriebsseitige Zahnrad der auf beide Teilgetriebe schaltbaren fünften Radebene als ein Festzahnrad drehfest auf der Abtriebswelle angeordnet sein. In diesem Fall würde im Fahrbetrieb die fünfte Radebene ständig mitdrehen und gegebenenfalls die Drehlager vorzeitig verschleißen. Vor diesem Hintergrund ist erfindungsgemäß das abtriebsseitige Zahnrad der fünften Radebene lose auf der Abtriebswelle gelagert und über ein siebtes Schaltelement (SE-G) an die Abtriebswelle kuppelbar.

Wie oben erwähnt, kann der Zahnradsatz der fünften Radebene über ein Schaltelement entweder auf das erste oder auf das zweite Teilgetriebe geschaltet werden. Dadurch kann bei geringem getriebetechnischen Mehraufwand und ohne Verzicht auf den Vorteil der zugkraftunterbrechungsfreien Beschleunigung des Kraftfahrzeugs zumindest ein Vorwärtsgang übersprungen werden, also beispielsweise von einem ungeraden Vorwärtsgang verzögerungsfrei in den nächsten ungeraden Vorwärtsgang geschaltet werden. Insbesondere bei starken Motorisierungen des Kraftfahrzeugs und bei definierten Fahrbedingungen kann dies eine verbesserte, ohne Schaltverzögerungen ablaufende Beschleunigung und gegebenenfalls einen verbesserten Wirkungsgrad im Fahrbetrieb ermöglichen.

Besonders bevorzugt kann der die fünfte Radebene bildende Zahnradsatz zumindest den 3. Vorwärtsgang des zweiten Teilgetriebes bilden, der mittel- oder unmittelbar wahlweise mit der Eingangswelle des einen oder des anderen Teilgetriebes (A, B) trieblich verbindbar ist. Daraus resultiert neben der regulären Schaltstrategie eine Variante, in der vom 1. Gang in den 3. Gang und bei Bedarf von diesem in den 5. Gang zugkraftunterbrechungsfrei geschaltet werden kann.

Ist bei einer entsprechenden, getriebetechnischen Auslegung der besagte Zahnradsatz auch in den Leistungsfluss des 1. Vorwärtsganges eingebunden, so kann auch hier das Teilgetriebe gewechselt werden, woraus ein zusätzlicher Freiheitsgrad in der Funktionalität geschaffen ist.

In einer bevorzugten Ausgestaltung der Erfindung kann das Festzahnrad des auf beide Teilgetriebe schaltbaren, die fünfte Radebene bildenden Zahnradsatzes auf der gemeinsamen Abtriebswelle des Dopppelkupplungsgetriebes angeordnet sein, während das korrespondierende, schaltbare Loszahnrad steuerungstechnisch einfach mit dem dritten Schaltelement (SE-D) des ersten Teilgetriebes (A) oder mit dem fünften Schaltelement (SE-B) des zweiten Teilgetriebes (B) kuppelbar ist. Die Schaltelemente können dabei Doppelkupplungen sein, mittels denen ein Zahnradsatz des einen Teilgetriebes oder der Zahnradsatz des anderen Teilgetriebes schaltbar ist.

In einer vorteilhaften Weiterbildung der Erfindung können bei einem 12-Gang-Getriebe durch Mehrfachnutzung der Zahnradsätze nur acht Gangebenen verwendet sein, wobei der gemeinsam genutzte, die fünfte Radebene bildende Zahnradsatz des zweiten Teilgetriebes dem ersten Teilgetriebe unmittelbar benachbart angeordnet ist. Das Doppelkupplungsgetriebe kann somit baulich relativ kurz und mit geringst möglichen Schaltelementen und Gangstellern ausgeführt sein.

Des Weiteren können dazu Festzahnräder mehrerer Rad- oder Gangebenen beider Teilgetriebe auf jeweils gemeinsamen Hohlwellen befestigt und diese auf der gemeinsamen Abtriebswelle drehbar gelagert sowie über Schaltkupplungen (das heißt Schaltelemente) mit der Abtriebswelle koppelbar sein.

Ferner können weitere Festzahnräder der Gangebenen auf einer Hohlwelle angeordnet sein, die auf der Eingangswelle des einen Teilgetriebes gelagert ist und die mittels einer Schaltkupplung mit dem besagten Zahnradsatz des anderen Teilgetriebes kuppelbar ist.

Schließlich können bei möglichst geringem, getriebetechnischen Aufwand die zwölf Vorwärtsgänge mittels fünf Doppelkupplungen und einer Einfachkupplung schaltbar sein, wobei vier Doppelkupplungen auf den koaxial angeordneten beiden Eingangswellen der Teilgetriebe und eine Doppelkupplung sowie eine Einfachkupplung auf der gemeinsamen Abtriebswelle positioniert sind.

Ein Ausführungsbeispiel der Erfindung ist im Folgenden anhand der beigefügten Zeichnung näher beschrieben. Es zeigen:
- Fig. 1: als Blockschaltbild ein Geschwindigkeits-Wechselgetriebe für Kraftfahrzeuge mit zwei Teilgetrieben, die über zwei lastschaltbare Kupplungen aktivierbar sind und mit 12 schaltbaren Vorwärtsgängen, wobei ein Zahnradsatz des Getriebes für beide Teilgetriebe nutzbar ist; und
- Fig. 2: eine Schaltmatrix des Wechselgetriebes nach Fig. 1.

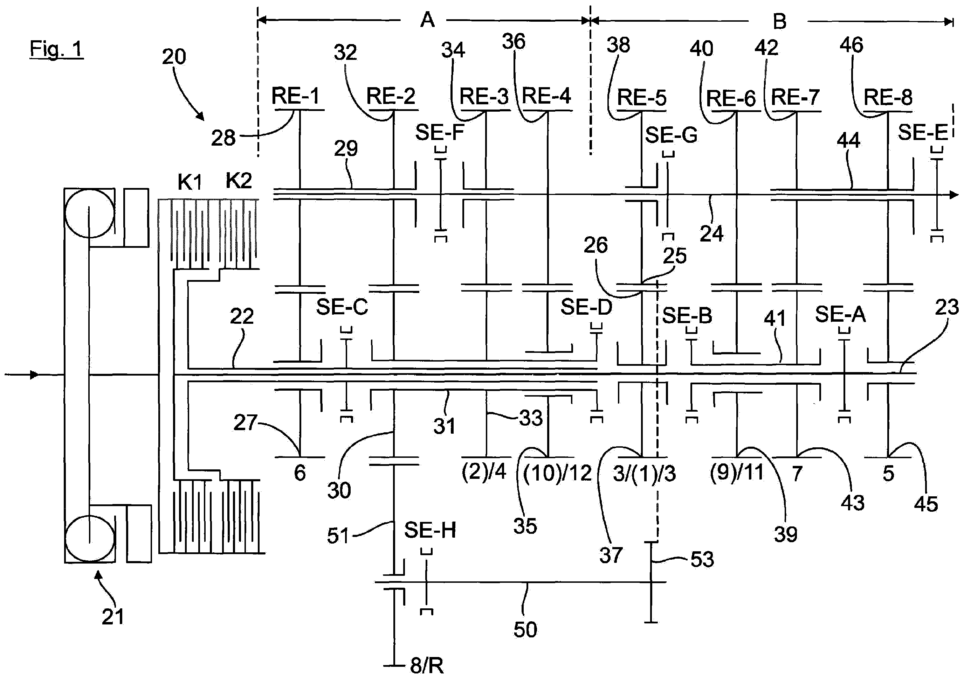

Die Fig. 1 zeigt ein Geschwindigkeits-Wechselgetriebe bzw. ein Doppelkupplungsgetriebe 20 für ein Kraftfahrzeug, mittels dem in acht Radebenen bzw. mit acht Zahnradsätzen RE-1 bis RE-8 bis zu zwölf Vorwärtsgänge 1 bis 12 schaltbar sind. Jede der Radebenen RE-1 bis RE-8 ist aus einem zur Eingangswelle 22, 23 koaxialen antriebsseitigen Zahnrad und einem zur Abtriebswelle 24 koaxialen abtriebsseitigen Zahnrad aufgebaut.

Das Wechselgetriebe 20 weist zwei zum Beispiel mit einer Brennkraftmaschine (nicht dargestellt) und einem Drehschwingungsdämpfer 21 trieblich verbundene und über zwei lastschaltbare Kupplungen K1, K2 alternierend kuppelbare Eingangswellen 22, 23 auf, von denen die Eingangswelle 22 eine Hohlwelle ist, durch die hindurch die zweite Eingangswelle 23 geführt ist. Die Drehlagerung und das korrespondierende Getriebegehäuse sind nicht dargestellt.

Die Zahnradsätze oder Radebenen RE-1 bis RE-8 sind in an sich bekannter Weise durch schaltbare Loszahnräder und durch Festzahnräder auf den Eingangswellen 22, 23 und auf einer gemeinsamen Abtriebswelle 24 in noch zu beschreibender Weise angeordnet, wobei die Zahnradsätze RE-1 bis RE-4 ein erstes Teilgetriebe A und die Zahnradsätze RE-5 bis RE-8 ein zweites Teilgetriebe B bilden.

Der Zahnradsatz RE-5 des Teilgetriebes B ist mit einem Festzahnrad 38 auf der Abtriebswelle 24 und einem schaltbaren Loszahnrad 26 auf der Eingangswelle 23 axial unmittelbar benachbart dem Teilgetriebe A derart angeordnet, dass dessen Loszahnrad 27 über eine Schaltkupplung SE-D entweder mit dem Teilgetriebe A oder über eine Schaltkupplung SE-B dem Teilgetriebe B kuppelbar ist.

Die Anordnung der übrigen Zahnradsätze ist derart, dass bei nur acht Zahnradsätzen RE-1 bis RE-8 die 12 Vorwärtsgänge realisierbar sind, wobei:
- das Loszahnrad 27 von RE-1 auf der Eingangswelle 22 und dessen Festzahnrad 28 auf einer koaxial zur Abtriebswelle 24 gelagerten Hohlwelle 29 drehfest angeordnet ist;
- ein Festzahnrad 30 von RE-2 über eine Hohlwelle 31 auf der Eingangswelle 22 gelagert und das korrespondierende Festzahnrad 32 ebenfalls auf der Hohlwelle 29 drehfest angeordnet ist;
- das Loszahnrad 27 und die Hohlwelle 31 mittels einer Schaltkupplung SE-C alternierend mit der Eingangswelle 22 kuppelbar sind;
- ein Festzahnrad 33 von RE-3 auf der Hohlwelle 31 angeordnet ist, während dessen Loszahnrad 34 oder die Hohlwelle 29 alternierend über eine Schaltkupplung SE-F mit der Abtriebswelle 24 kuppelbar sind;
- auf der Hohlwelle 31 ist ferner ein Loszahnrad 35 des Zahnradsatzes RE-4 gelagert, das mit einem Festzahnrad 36 auf der Abtriebswelle 24 kämmt;
- unmittelbar axial benachbart zum Loszahnrad 35 des Zahnradsatzes RE-4 ist das Loszahnrad 37 des Zahnradsatzes RE-5 auf der zentralen Eingangswelle 23 des Teilgetriebes B gelagert, das mit dem weiteren Festzahnrad 38 auf der Abtriebswelle 24 in Eingriff ist;
- die beiden Loszahnräder 35, 37 sind über eine weitere Schaltkupplung SE-D alternierend mit der Hohlwelle 31 auf der Eingangswelle 22 kuppelbar;
- zudem ist das Loszahnrad 37 über eine zweite Schaltkupplung SE-B mit einer auf der Eingangswelle 23 gelagerten Hohlwelle 41 kuppelbar, wobei die Hohlwelle 41 ein Loszahnrad 39 des Zahnradsatzes RE-6 trägt, das ebenfalls über die Schaltkupplung SE-B an die Hohlwelle 41 kuppelbar ist;
- das Loszahnrad 39 des Zahnradsatzes RE-6 kämmt mit einem weiteren Festzahnrad 40 auf der Abtriebswelle 24;
- die Hohlwelle 41 weist ferner ein Festzahnrad 43 des Zahnradsatzes RE-7 auf, das mit einem Festzahnrad 42 auf einer auf der Abtriebswelle 24 drehbar gelagerten Hohlwelle 44 in Eingriff ist;
- die Hohlwelle 41 auf der Eingangswelle 23 kann ferner über eine Schaltkupplung SE-A mit der Eingangswelle 23 verbunden werden, wobei die Schaltkupplung SE-A alternierend auch ein Loszahnrad 45 des Zahnradsatzes RE-8 an die Eingangswelle 23 kuppelt;
- das Festzahnrad 46 des Zahnradsatzes RE-8 ist analog zum Festzahnrad 42 des RE-7 auf der Hohlwelle 44 angeordnet, wobei die Hohlwelle 44 über eine Einfach-Schaltkupplung SE-E mit der Abtriebswelle 24 verbindbar ist.

Die Schaltkupplungen SE-C, SE-F, SE-D, SE-B und SE-A können als bekannte und bei Schaltgetrieben übliche Doppel-Synchronkupplungen (mit einer Stellung deren Schaltmuffen auf der Zeichnung Fig. 1 nach links (li) oder nach rechts (re) und die Schaltkupplung SE-E als eine Einfach-Synchronkupplung (Schaltstellung Ii) ausgeführt sein, die elektronisch gesteuert über entsprechende elektrisch/hydraulisch betätigte Aktoren jeweils aus einer Neutralstellung (wie gezeichnet) geschaltet werden.

Die Kupplungen K1, K2 können hydraulisch lastschaltbare Lamellenkupplungen sein, die alternierend betätigt das Teilgetriebe A oder B nach entsprechender Vorwahl der Gänge in den Antriebskraftfluss einkuppeln.

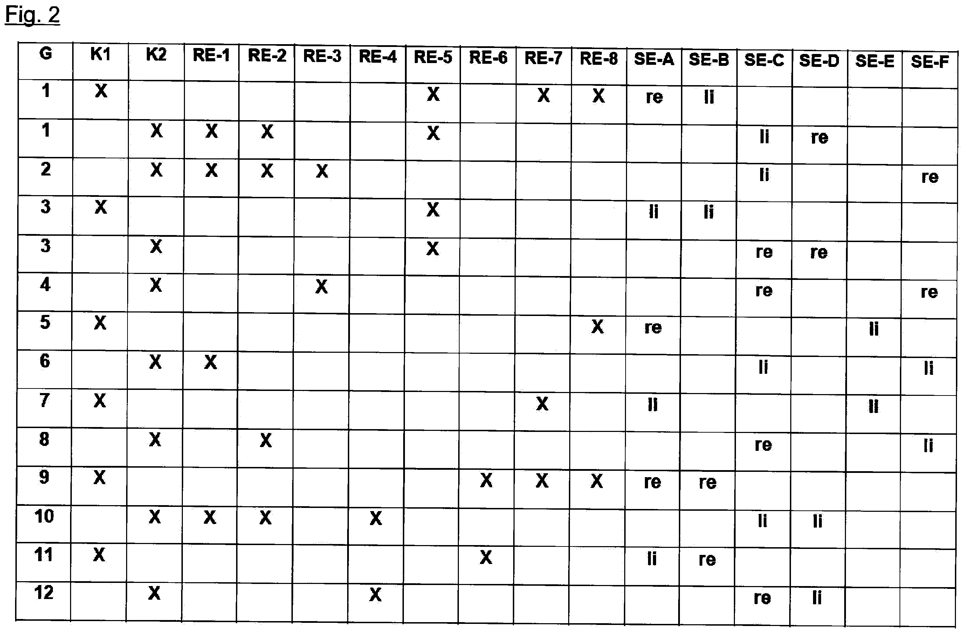

Die Vorwärtsgänge 1 bis 12 (ein gegebenenfalls erforderlicher Rückwärtsgang ist der Einfachheit halber nicht eingezeichnet) können gemäß der Schaltmatrix Fig. 2 geschaltet werden, wobei der jeweils geschaltete Gang (G) 1 bis 12 in der linken Spalte der Matrix angegeben ist. Die Kreuzchen (X) bezeichnen die in den jeweiligen Kraftfluss eingebundenen Zahnradsätze RE1 bis RE8 und die Bezeichnung (Ii) oder (re) die Schaltstellungen der jeweiligen Schaltkupplungen SE. Zu bemerken ist, dass die Gänge 1 und 3 in der Spalte G zweifach angegeben sind, da diese wahlweise über das Teilgetriebe B (Kupplung K1) oder das Teilgetriebe A (Kupplung K2) schaltbar sind.

Die reguläre Schaltfolge kann dementsprechend sein 1 - 2 - 3 - 4 - 5 ff., wobei der 1. Gang über die Kupplung K1 (Teilgetriebe B) und die weiteren Gänge durch alternierendes Schließen der Kupplungen K2, K1, K2, etc. erfolgt. In dem Teilgetriebe mit der offenen Kupplung kann wie bekannt der nächste Gang vorgewählt werden, wodurch durch Umschalten der Kupplungen K1, K2 ohne Unterbrechung der Zugkraft geschaltet werden kann.

In der modifizierten Schaltfolge kann der 2. Gang und gegebenenfalls auch der 4. Gang ohne Unterbrechung der Zugkraft übersprungen werden, wobei der Kraftfluss im 1.Gang über die Kupplung K1 oder K2 (Teilgetriebe A oder B) bei entsprechender Einbindung der Zahnradsätze RE-1 bis RE-8 und Stellung der Schaltkupplungen SE (siehe Matrix) gesteuert wird. Daraus resultiert, dass jeweils der 3. Gang und gegebenenfalls der 5.Gang bereits vorgewählt und durch Wechsel der lastschaltbaren Kupplung ohne Unterbrechung der Zugkraft aktivierbar ist.

Steuerbar sind somit neben der regulären Schaltfolge des Doppelkupplungsgetriebes 20 die modifizierten Schaltfolgen 1 - 3 - 4 - 5 - 6 ff. in der Folge K2, K1, K2, K1, K2 ff. oder 1 - 3 - 5 - 6, ff., in der Folge K1, K2, K1, K2 ff., wobei die Schaltfolgen abhängig von Betriebsdaten und Fahrparametern des Kraftfahrzeugs über eine elektronische Getriebesteuerung vorgebbar und/oder manuell einstellbar sind.

Wie aus Schaltmatrix der Fig. 2 weiter hervorgeht, sind die Vorwärtsgänge 3 bis 8 sowie 11 und 12 als Direktgänge ausgelegt, die jeweils genau eine in den Momentenfluss geschaltete Radebene aufweisen. Im Unterschied dazu sind die Vorwärtsgänge 1, 2 und 9 sowie 10 nicht als Direktgänge, sondern als Verwindungsgänge realisiert, in denen mittels der Schaltelemente SE-A bis SE-G jeweils genau drei Radebenen in Reihe kombiniert in den Momentenfluss geschaltet sind. Beispielhaft sind im ersten Vorwärtsgang (Verwindungsgang) die achte, siebte und fünfte Radebene RE-8, RE-7 und RE-5 im Momentenfluss geschaltet. Im 2. Vorwärtsgang (Verwindungsgang) sind die erste, zweite und dritte Radebene RE-1, RE-2, RE-3 in den Momentenfluss geschaltet. Im 9. Vorwärtsgang (Verwindungsgang) sind die achte, siebte und sechste Radebene RE-8, RE-7, RE-6 geschaltet. Bei eingelegtem 10. Vorwärtsgang (Verwindungsgang) sind die erste, zweite und vierte Radebene RE-1, RE-2 und RE-4 geschaltet.

Zur Bereitstellung des jeweiligen Verwindungs-Vorwärtsgangs 1, 2 und 9 sowie 10 sind die zu schaltenden drei Radebenen entweder komplett dem ersten Teilgetriebe A oder komplett dem zweiten Teilgetriebe B zugeordnet. Das heißt dass bei einem geschalteten Verwindungs-Vorwärtsgang nur das die drei Verwindungs-Radebenen aufweisende Teilgetriebe im Momentenfluss des eingelegten Ganges eingebunden ist, während das andere Teilgetriebe vollständig vom Momentenfluss abgekoppelt ist.

Zur Bildung eines Rückwärtsganges R ist achsparallel zu den Eingangswellen 22, 23 und der Abtriebswelle 24 eine die beide Teilgetriebe A, B überbrückende Rückwärtsgangwelle 50 im nicht dargestellten Getriebegehäuse des Doppelkupplungsgetriebes gelagert. Die Rückwärtsgangwelle 50 trägt zwei Umkehrzahnräder 51, 53, von denen das erste Umkehrzahnrad 51 mit dem antriebsseitigen Zahnrad 30 der zweiten Radebene RE-2 und das zweite Umkehrzahnrad 53 mit dem antriebsseitigen Zahnrad 37 der fünften Radebene RE-5 kämmt.

Das mit der zweiten Radebene RE-2 des Teilgetriebes A zusammenwirkende erste Umkehrzahnrad 51 ist als Loszahnrad ausgeführt und mittels eines einseitig schaltbaren Schaltelements SE-H an die Rückwärtsgangwelle 50 ankuppelbar. Das mit der fünften Radebene RE-5 zusammenwirkende Umkehrzahnrad 53 ist dagegen als ein Festzahnrad ausgeführt.

Der Rückwärtsgang R wird dadurch aktiviert, dass das von der ersten Eingangswelle 22 getragene Schaltelement SE-C in der Fig. 1 nach links auf das antriebsseitige Zahnrad 30 der ersten Radebene RE-1 geschaltet wird. Zudem wird das Schaltelement SE-H nach links auf das erste Umkehrzahnrad 51 geschaltet und wird das abtriebsseitige Zahnrad 38 der Zwischen-Radebene RE-5 über das Schaltelement SE-G mit der Abtriebswelle 24 gekuppelt. Der Rückwärtsgang R ist daher ein Verwindungsgang, wobei der Momentenfluss bei geschlossener Trennkupplung K2 über die hohle Eingangswelle 22 und das antriebsseitige Zahnrad 30 der zweiten Radebene RE-2 auf das erste Umkehrzahnrad 51 und weitere über die Rückwärtsgangwelle 50 sowie das zweite Umkehrzahnrad 53 auf das abtriebsseitige Zahnrad 38 der Zwischen-Radebene RE-5 verläuft.

## Patentansprüche

1. Doppelkupplungsgetriebe für ein Kraftfahrzeug, mit über erste bis siebte Schaltelemente schaltbaren Zahnradsätzen, die genau acht in Axialrichtung von der Eingangs- zur Ausgangsseite des Doppelkupplungsgetriebes in der Reihenfolge erste bis achte hintereinander angeordnete Radebenen (RE-1 bis RE-8) bilden, die jeweils einem ersten Teilgetriebe (A) und einem zweiten Teilgetriebe (B) zugeordnet sind, von denen das erste Teilgetriebe (A) eine erste Eingangswelle (22) aufweist und das zweite Teilgetriebe (B) eine zweite Eingangswelle (23) aufweist, und beide Teilgetriebe (A, B) eine gemeinsame Abtriebswelle (24) aufweisen, wobei die zueinander koaxialen Eingangswellen (22, 23) über je eine lastschaltbare Kupplung (K1, K2) alternierend aktivierbar sind, und dem ersten Teilgetriebe (A) die geraden Vorwärtsgänge (2, 4, 6, 8, 10, 12 - Fig.2) sowie dem zweiten Teilgetriebe (B) die ungeraden Vorwärtsgänge (1, 3, 5, 7, 9, 11 - Fig.2) zugeordnet sind, die bei einer Gangschaltung über die ersten bis siebten Schaltelemente (SE-A bis SE-G) schaltbar sind, wobei jede Radebene (RE-1 bis RE-8) als Vorwärtsgang jeweils einen Direktgang (3, 4, 5, 6, 7, 8, 11, 12 - Fig.2) bereitstellt, bei dem bei aktiviertem ersten oder zweiten Teilgetriebe (A, B) genau eine Radebene in den durch das aktivierte erste oder zweite Teilgetriebe (A, B) verlaufenden Momentenfluss geschaltet ist, und wobei die Radebenen (RE-1 bis RE-8) zusätzlich zumindest einen Verwindungsgang als Vorwärtsgang bereitstellen, in denen mittels der ersten bis siebten Schaltelemente (SE-A bis SE-G) jeweils genau drei Radebenen in Reihe kombiniert im Momentenfluss geschaltet sind, **dadurch gekennzeichnet, dass** insgesamt vier Verwindungs-Vorwärtsgänge (1, 2, 9, 10 - Fig.2) bei den insgesamt acht Radebenen (RE-1 bis RE-8) bereitstellbar sind, und dass die für jeden Verwindungsgang (1., 2., 9., 10. Gang) geschalteten drei Radebenen entweder komplett dem ersten Teilgetriebe (A) oder komplett dem zweiten Teilgetriebe (B) zugeordnet sind, so dass bei jedem geschalteten Verwindungs-Vorwärtsgang nur das Teilgetriebe im Momentenfluss eingebunden ist, das die für den jeweiligen Verwindungsgang geschalteten drei Radebenen aufweist, und das andere Teilgetriebe vollständig vom Momentenfluss abgekoppelt ist, dass die ersten und zweiten Eingangswellen (22, 23) frei von darauf angeordneten drehfesten Zahnrädern der acht Radebenen (RE-1 bis RE-8) sind, und dass die erste Eingangswelle (22) genau ein in Axialrichtung beidseitig schaltbares erstes Schaltelement (SE-C) aufweist und die zweite Eingangswelle (23) genau ein in Axialrichtung beidseitig schaltbares zweites Schaltelement (SE-A) aufweist, und dass mittels des ersten Schaltelements (SE-C) die erste Eingangswelle (22) mit den ersten bis vierten Radebenen (RE-1 bis RE-4) des ersten Teilgetriebes (A) kuppelbar oder davon abkuppelbar ist, und dass mittels des zweiten Schaltelements (SE-A) die zweite Eingangswelle (23) mit den fünften bis achten Radebenen (RE-5 bis RE-8) des zweiten Teilgetriebes (B) kuppelbar oder davon abkuppelbar ist, dass in der Axialrichtung des ersten Schaltelements (SE-C) auf dessen einer Seite ein auf der ersten Eingangswelle (22) gelagertes, antriebsseitiges Loszahnrad (27) der ersten Radebene (RE-1) und auf der anderen Seite des ersten Schaltelements (SE-C) eine auf der ersten Eingangswelle (22) koaxial gelagerte, antriebsseitige Hohlwelle (31) des ersten Teilgetriebes (A) angeordnet ist, die über das erste Schaltelement (SE-C) alternierend mit der ersten Eingangswelle (22) kuppelbar sind, und dass die antriebsseitige Hohlwelle (31) des ersten Teilgetriebes (A) ein Festzahnrad (30) der zweiten Radebene (RE-2) und ein Festzahnrad (33) der dritten Radebene (RE-3) trägt, dass auf der antriebsseitigen Hohlwelle (31) des ersten Teilgetriebes (A) ein antriebsseitiges Zahnrad (35) der vierten Radebene (RE-4) lose gelagert ist, und dass die antriebsseitige Hohlwelle (31) des ersten Teilgetriebes (A) über ein drittes Schaltelement (SE-D) mit dem losgelagerten antriebsseitigen Zahnrad (35) der vierten Radebene (RE-4) kuppelbar ist, dass das zweite Teilgetriebe (B) die, dem ersten Teilgetriebe (A) in Axialrichtung unmittelbar angrenzende fünfte Radebene (RE-5) aufweist, und dass die fünfte Radebene (RE-5) mittels des dritten Schaltelements (SE-D) mit dem ersten Teilgetriebe (A) kuppelbar ist, dass die auf beide Teilgetriebe (A, B) schaltbare fünfte Radebene (RE-5) mit ihrem antriebsseitigen Zahnrad (37) auf der zweiten Eingangswelle (23) lose gelagert ist, und dass das antriebsseitige Zahnrad (37) der fünften Radebene (RE-5) mittels des dritten Schaltelements (SE-D) an die antriebsseitige Hohlwelle (31) des ersten Teilgetriebes (A) kuppelbar ist, und dass das abtriebsseitige Zahnrad (38) der auf beide Teilgetriebe (A, B) schaltbaren fünften Radebene (RE-5) lose auf der Abtriebswelle (24) gelagert ist und über ein siebtes Schaltelement (SE-G) mit der Abtriebswelle (24) kuppelbar ist.

2. Doppelkupplungsgetriebe nach Anspruch 1, **dadurch gekennzeichnet, dass** zum Schalten der Vorwärtsgänge genau fünf in Axialrichtung beidseitig schaltbare Schaltelemente (SE-A, SE-B, SE-D, SE-C, SE-F) vorgesehen sind, und dass zwei in der Axialrichtung einseitig schaltbare Schaltelemente (SE-E, SE-G) vorgesehen sind.

3. Doppelkupplungsgetriebe nach Anspruch 2, **dadurch gekennzeichnet, dass** von den fünf beidseitig schaltbaren Schaltelementen (SE-A, SE-B, SE-D, SE-C, SE-F) genau vier Schaltelemente koaxial zur Eingangsachse der ersten und zweiten Eingangswellen (22, 23) angeordnet sind, und dass genau ein beidseitig schaltbares Schaltelement (SE-F) auf der Abtriebswelle (24) angeordnet ist.

4. Doppelkupplungsgetriebe nach einem der vorhergehenden Ansprüche, **dadurch gekennzeichnet, dass** zum Schalten sämtlicher Vorwärtsgänge (1. bis 12. Gang) mindestens zwei der Schaltelemente (SE-A bis SE-G) betätigbar sind.

5. Doppelkupplungsgetriebe nach einem der vorhergehenden Ansprüche, **dadurch gekennzeichnet, dass** in der Axialrichtung des zweiten Schaltelements (SE-A) des zweiten Teilgetriebes (B) auf der einen Seite des zweiten Schaltelements (SE-A) ein auf der zweiten Eingangswelle (23) gelagertes, antriebsseitiges Loszahnrad (45) der achten Radebene (RE-8) und auf der anderen Seite des zweiten Schaltelements (SE-A) eine auf der zweiten Eingangswelle (23) koaxial gelagerte antriebsseitige Hohlwelle (41) des zweiten Teilgetriebes (B) angeordnet ist, und dass das Loszahnrad (45) der achten Radebene (RE-8) und die antriebsseitige Hohlwelle (41) des zweiten Teilgetriebes (B) über das zweite Schaltelement (SE-A) alternierend mit der zweiten Eingangswelle (23) kuppelbar sind, und dass die antriebsseitige Hohlwelle (41) des zweiten Teilgetriebes (B) zumindest ein Festzahnrad (43) der siebten Radebene (RE-7) trägt.

6. Doppelkupplungsgetriebe nach Anspruch 5, **dadurch gekennzeichnet, dass** auf der antriebsseitigen Hohlwelle (41) des zweiten Teilgetriebes (B) ein antriebsseitiges Zahnrad (39) der sechsten Radebene (RE-6) lose gelagert ist, und dass die antriebsseitige Hohlwelle (41) des zweiten Teilgetriebes (B) ein viertes Schaltelement (SE-B) aufweist, mit dem das losgelagerte antriebsseitige Zahnrad (39) der sechsten Radebene (RE-6) mit der antriebsseitigen Hohlwelle (41) des zweiten Teilgetriebes (B) kuppelbar ist.

7. Doppelkupplungsgetriebe nach Anspruch 6, **dadurch gekennzeichnet, dass** das antriebsseitige Zahnrad (37) der auf beide Teilgetriebe (A, B) schaltbaren fünften Radebene (RE-5) mittels des vierten Schaltelements (SE-B) mit dem zweiten Teilgetriebe (B) kuppelbar ist.

8. Doppelkupplungsgetriebe nach einem der vorhergehenden Ansprüche, **dadurch gekennzeichnet, dass** die abtriebsseitigen Zahnräder (28, 32) der ersten und zweiten Radebenen (RE-1, RE-2) des ersten Teilgetriebes (A) drehfest auf einer abtriebsseitigen Hohlwelle (29) des ersten Teilgetriebes (A) angeordnet sind, die koaxial auf der Abtriebswelle (24) drehbar gelagert ist.

9. Doppelkupplungsgetriebe nach Anspruch 8, **dadurch gekennzeichnet, dass** die Abtriebswelle (24) ein fünftes Schaltelement (SE-F) aufweist, mittels dem im ersten Teilgetriebe (A) alternierend die abtriebsseitige Hohlwelle (29) des ersten Teilgetriebes (A) oder ein abtriebsseitiges Zahnrad (34) der dritten Radebene (RE-3) mit der Abtriebswelle (24) kuppelbar ist.

10. Doppelkupplungsgetriebe nach einem der vorhergehenden Ansprüche, **dadurch gekennzeichnet, dass** die abtriebsseitigen Zahnräder (42, 46) der siebten und achten Radebenen (RE-7, RE-8) des zweiten Teilgetriebes (B) drehfest auf einer abtriebsseitigen Hohlwelle (44) des zweiten Teilgetriebes (B) angeordnet sind, die koaxial auf der Abtriebswelle (24) drehbar gelagert ist.

11. Doppelkupplungsgetriebe nach Anspruch 10, **dadurch gekennzeichnet, dass** die Abtriebswelle (24) ein sechstes Schaltelement (SE-E) aufweist, mittels dem die abtriebsseitige Hohlwelle (44) des zweiten Teilgetriebes (B) mit der Abtriebswelle (24) kuppelbar ist.

## Claims

1. Dual clutch transmission for a motor vehicle, having sets of gearwheels switchable via first to seventh switching elements which form exactly eight wheel planes (RE-1 to RE-8) arranged one after another in the axial direction from the input to the output side of the dual clutch transmission in the sequence first to eighth, said wheel planes are respectively assigned to a first sub-transmission (A) and a second sub-transmission (B), of which the first sub-transmission (A) has a first input shaft (22) and the second sub-transmission (B) has a second input shaft (23) and both sub-transmissions (A, B) have a common output shaft (24), wherein the input shafts (22, 23) coaxial to one another are alternately activatable via each power shiftable clutch (K1, K2) and the even forwards gears (2, 4, 6, 8, 10, 12 - Fig. 2) are assigned to the first sub-transmission (A) and the odd forwards gears (1, 3, 5, 7, 9, 11 - Fig. 2) are assigned to the second sub-transmission (B) which are switchable in the case of a gear change via the first to seventh switching elements (SE-A to SE-G), wherein each wheel plane (RE-1 to RE-8) provides respectively one direct gear (3, 4, 5, 6, 7, 8, 11, 12 - Fig. 2) as a forwards gear, in the case of which when the first or second sub-transmission (A, B) is activated, exactly one wheel plane is switched in the torque flow running through the activated first or second sub-transmission (A, B) and wherein the wheel planes (RE-1 to RE-8) also provide at least one twist gear as a forwards gear, in the case of which exactly three wheel planes combined in a row are respectively switched in the torque flow by means of the first to seventh switching elements (SE-A to SE-G), **characterised in that** in total four twist forwards gears (1, 2, 9, 10 - Fig. 2) can be provided for the in total eight wheel planes (RE-1 to RE-8), and **in that** the three wheel planes switched for each twist gear (1^{st}, 2^{nd}, 9^{th}, 10^{th} gear) are assigned either completely to the first sub-transmission (A) or completely to the second sub-transmission (B) such that in the case of each switched twist forwards gear only the sub-transmission, which has the three wheel planes switched for the respective twist gear, is integrated in the torque flow and the other sub-transmission is completely decoupled from the torque flow, **in that** the first and second input shafts (22, 23) are free from gearwheels of the eight wheel planes (RE-1 to RE-8) arranged thereon in a torque-proof manner and **in that** the first input shaft (22) has exactly one first switching element (SE-C) switchable on both sides in the axial direction and the second input shaft (23) has exactly one second switching element (SE-A) switching on both sides in the axial direction and **in that** the first input shaft (22) is couplable by means of the first switching element (SE-C) to the first to fourth wheel planes (RE-1 to RE-4) of the first sub-transmission (A) or is decouplable therefrom and **in that** the second input shaft (23) is couplable by means of the second switching element (SE-A) to the fifth to eighth wheel planes (RE-5 to RE-8) of the second sub-transmission (B) or is decouplable therefrom, **in that** a drive-side idler gearwheel (27) of the first wheel plane (RE-1) mounted on the first input shaft (22) is arranged in the axial direction of the first switching element (SE-C) on its one side and a drive-side hollow shaft (31) of the first sub-transmission (A) mounted coaxially on the first input shaft (22) is arranged on the other side of the first switching element (SE-C) which are couplable via the first switching element (SE-C) alternately with the first input shaft (22) and **in that** the drive-side hollow shaft (31) of the first sub-transmission (A) carries a fixed gearwheel (30) of the second wheel plane (RE-2) and a fixed gearwheel (33) of the third wheel plane (RE-3) **in that** a drive-side gearwheel (35) of the fourth wheel plane (RE-4) is mounted loosely on the drive-side hollow shaft (31) of the first sub-transmission (A) and **in that** the drive-side hollow shaft (31) of the first sub-transmission (A) is couplable via a third switching element (SE-D) to the loosely-mounted drive-side gearwheel (35) of the fourth wheel plane (RE-4), **in that** the second sub-transmission (B) comprises the fifth wheel plane (RE-5) directly adjacent to the first sub-transmission (A) in the axial direction and **in that** the fifth wheel plane (RE-5) is couplable to the first sub-transmission (A) by means of the third switching element (SE-D), **in that** the fifth wheel plane (RE-5) switchable on both sub-transmissions (A, B) is loosely mounted with its drive-side gearwheel (37) on the second input shaft (23) and **in that** the drive-side gear wheel (37) of the fifth wheel plane (RE-5) is couplable to the drive-side hollow shaft (31) of the first sub-transmission (A) by means of the third switching element (SE-D) and **in that** the output-side gearwheel (38) of the fifth wheel plane (RE-5) switchable on both sub-transmissions (A, B) is loosely mounted on the output shaft (24) and is couplable to the output shaft (24) via a seventh switching element (SE-G).

2. Dual clutch transmission according to claim 1, **characterised in that** exactly five switching elements (SE-A, SE-B, SE-D, SE-C, SE-F) switchable on both sides in the axial direction are provided to switch the forwards gears and **in that** two switching elements (SE-E, SE-G) switchable on one side in the axial direction are provided.

3. Dual clutch transmission according to claim 2, **characterised in that** of the five switching elements (SE-A, SE-B, SE-D, SE-C, SE-F) switchable on both sides, exactly four switching elements are arranged coaxially to the input axis of the first and second input shafts (22, 23) and **in that** exactly one switching element (SE-F) switchable on both sides is arranged on the output shaft (24).

4. Dual clutch transmission according to any one of the preceding claims, **characterised in that** at least two of the switching elements (SE-A to SE-G) are actuatable to switch all forwards gear (1^{st} to 12^{th} gear).

5. Dual clutch transmission according to any one of the preceding claims, **characterised in that** a drive-side idler gearwheel (45) of the eighth wheel plane (RE-8) mounted coaxially on the second input shaft (23) is arranged on the one side of the second switching element (SE-A) in the axial direction of the second switching element (SE-A) of the second sub-transmission (B) and a drive-side hollow shaft (41) of the second sub-transmission (B) mounted coaxially on the second input shaft (23) is arranged on the other side of the second switching element (SE-A) and **in that** the idler gearwheel (45) of the eighth wheel plane (RE-8) and the drive-side hollow shaft (41) of the second sub-transmission (B) are couplable via the second switching element (SE-A) alternately to the second input shaft (23) and **in that** the drive-side hollow shaft (41) of the second sub-transmission (B) carries at least one fixed gearwheel (43) of the seventh wheel plane (RE-7).

6. Dual clutch transmission according to claim 5, **characterised in that** a drive-side gearwheel (39) of the sixth wheel plane (RE-6) is loosely mounted on the drive-side hollow shaft (41) of the second sub-transmission (B) and **in that** the drive-side hollow shaft (41) of the second sub-transmission (B) comprises a fourth switching element (SE-B) by means of which the loosely-mounted drive-side gearwheel (39) of the sixth wheel plane (RE-6) is couplable to the drive-side hollow shaft (41) of the second sub-transmission (B).

7. Dual clutch transmission according to claim 6, **characterised in that** the drive-side gearwheel (37) of the fifth wheel plane (RE-5) switchable on both sub-transmissions (A, B) is couplable to the second sub-transmission (B) by means of the fourth switching element (SE-B).

8. Dual clutch transmission according to any one of the preceding claims, **characterised in that** the output-side gearwheels (28, 32) of the first and second wheel planes (RE-1, RE-2) of the first sub-transmission (A) are arranged in a torque-proof manner on an output-side hollow shaft (29) of the first sub-transmission (B), said hollow shaft being mounted coaxially on the output shaft (24) so as to be rotatable.

9. Dual clutch transmission according to claim 8, **characterised in that** the output shaft (24) comprises a fifth switching element (SE-F) by means of which the output-side hollow shaft (29) of the first sub-transmission (B) or an output-side gearwheel (34) of the third wheel plane (RE-3) is alternately couplable to the output shaft (24) in the first sub-transmission (A).

10. Dual clutch transmission according to any one of the preceding claims, **characterised in that** the output-side gearwheels (42, 46) of the seventh and eighth wheel planes (RE-7, RE-8) of the second sub-transmission (B) are arranged in a torque-proof manner on an output-side hollow shaft (44) of the second sub-transmission (B), said hollow shaft being mounted coaxially on the output shaft (24) so as to be rotatable.

11. Dual clutch transmission according to claim 10, **characterised in that** the output shaft (24) comprises a sixth switching element (SE-E) by means of which the output-side hollow shaft (44) of the second sub-transmission (B) is couplable to the output shaft (24).

## Revendications

1. Boîte de vitesses à double embrayage pour un véhicule à moteur, avec des trains de roues dentées commutables par le biais de premier à septième éléments de commutation, qui forment exactement huit plans de roue (RE-1 à RE-8) agencés l'un derrière l'autre dans l'ordre un à huit dans la direction axiale du côté entrée au côté sortie de la boîte de vitesses à double embrayage, qui sont attribués respectivement à une première demi-boîte (A) et à une deuxième demi-boîte (B), desquelles la première demi-boîte (A) présente un premier arbre d'entrée (22) et la deuxième demi-boîte (B) présente un deuxième arbre d'entrée (23), et les deux demi-boîtes (A, B) présentent un arbre de sortie commun (24), dans laquelle les arbres d'entrée (22, 23) coaxiaux l'un à l'autre sont activables de manière alternée par le biais de respectivement un embrayage commutable sous charge (K1, K2), et les rapports de marche avant pairs (2, 4, 6, 8, 10, 12 - figure 2) sont attribués à la première demi-boîte (A) et les rapports de marche avant impairs (1, 3, 5, 7, 9, 11 - figure 2) sont attribués à la deuxième demi-boîte (B), qui sont commutables lors d'un changement de vitesses par le biais des premier à septième éléments de commutation (SE-A à SE-G), dans laquelle chaque plan de roue (RE-1 à RE-8) met à disposition respectivement une prise directe (3, 4, 5, 6, 7, 8, 11, 12 - figure 2) en tant que rapport de marche avant, dans laquelle exactement un plan de roue est commuté dans le flux de couple s'étendant à travers la première ou deuxième demi-boîte (A, B) activée lorsque la première ou deuxième demi-boîte (A, B) est activée, et dans laquelle les plans de roue (RE-1 à RE-8) mettent en outre à disposition au moins un rapport de torsion en tant que rapport de marche avant, dans lesquels respectivement exactement trois plans de roue sont commutés combinés en série dans le flux de couple au moyen des premier à septième éléments de commutation (SE-A à SE-G), **caractérisée en ce qu'**un total de quatre rapports de marche avant de torsion (1, 2, 9, 10 - figure 2) peuvent être mis à disposition pour le total de huit plans de roue (RE-1 à RE-8), et que les trois plans de roue commutés pour chaque rapport de torsion (1^{er}, 2^{ème} 9^{ème} 10^{ème} rapport) sont attribués soit complètement à la première demi-boîte (A) soit complètement à la deuxième demi-boîte (B), de sorte que pour chaque rapport de marche avant de torsion commuté, seule la demi-boîte est intégrée dans le flux de couple, qui présente les trois plans de roue commutés pour le rapport de torsion respectif, et l'autre demi-boîte est entièrement découplée du flux de couple, que les premier et deuxième arbres d'entrée (22, 23) sont dépourvus de roues dentées solidaires en rotation agencées sur ceux-ci des huit plans de roue (RE-1 à RE-8), et que le premier arbre d'entrée (22) présente exactement un premier élément de commutation (SE-C) commutable des deux côtés dans la direction axiale et le deuxième arbre d'entrée (23) présente exactement un deuxième élément de commutation (SE-A) commutable des deux côtés dans la direction axiale, et que le premier arbre d'entrée (22) peut être couplé avec les premier à quatrième plans de roue (RE-1 à RE-4) de la première demi-boîte (A) au moyen du premier élément de commutation (SE-C) ou en être découplé, et que le deuxième arbre d'entrée (23) peut être couplé avec les cinquième à huitième plans de roue (RE-5 à RE-8) de la deuxième demi-boîte (B) au moyen du deuxième élément de commutation (SE-A) ou en être découplé, que dans la direction axiale du premier élément de commutation (SE-C) sur un de son côté, une roue dentée libre côté entraînement (27), logée sur le premier arbre d'entrée (22), du premier plan de roue (RE-1) est agencée et un arbre creux côté entraînement (31), logé coaxialement sur le premier arbre d'entrée (22), de la première demi-boîte (A) est agencé de l'autre côté du premier élément de commutation (SE-C), qui peuvent être couplés de manière alternée avec le premier arbre d'entrée (22) par le biais du premier élément de commutation (SE-C), et que l'arbre creux côté entraînement (31) de la première demi-boîte (A) porte une roue dentée fixe (30) du deuxième plan de roue (RE-2) et une roue dentée fixe (33) du troisième plan de roue (RE-3), qu'une roue dentée côté entraînement (35) du quatrième plan de roue (RE-4) est logée librement sur l'arbre creux côté entraînement (31) de la première demi-boîte (A), et que l'arbre creux côté entraînement (31) de la première demi-boîte (A) peut être couplé avec la roue dentée côté entraînement (35) logée librement du quatrième plan de roue (RE-4) par le biais d'un troisième élément de commutation (SE-D), que la deuxième demi-boîte (B) présente le cinquième plan de roue (RE-5) directement adjacent à la première demi-boîte (A) dans la direction axiale, et que le cinquième plan de roue (RE-5) peut être couplé avec la première demi-boîte (A) au moyen du troisième élément de commutation (SE-D), que le cinquième plan de roue (RE-5) commutable sur les deux demi-boîtes (A, B) est logé librement avec sa roue dentée côté entraînement (37) sur le deuxième arbre d'entrée (23), et que la roue dentée côté entraînement (37) du cinquième plan de roue (RE-5) peut être couplée à l'arbre creux côté entraînement (31) de la première demi-boîte (A) au moyen du troisième élément de commutation (SE-D), et que la roue dentée côté sortie (38) du cinquième plan de roue (RE-5) commutable sur les deux demi-boîtes (A, B) est logée librement sur l'arbre de sortie (24) et peut être couplée avec l'arbre de sortie (24) par le biais d'un septième élément de commutation (SE-G).

2. Boîte de vitesses à double embrayage selon la revendication 1, **caractérisée en ce qu'**exactement cinq éléments de commutation (SE-A, SE-B, SE-D, SE-C, SE-F) commutables des deux côtés dans la direction axiale sont prévus pour la commutation des rapports de marche avant, et que deux éléments de commutation (SE-E, SE-G) commutables d'un côté dans la direction axiale sont prévus.

3. Boîte de vitesses à double embrayage selon la revendication 2, **caractérisée en ce qu'**exactement quatre éléments de commutation des cinq éléments de commutation (SE-A, SE-B, SE-D, SE-C, SE-F) commutables des deux côtés sont agencés coaxialement à l'axe d'entrée des premier et deuxième arbres d'entrée (22, 23), et qu'exactement un élément de commutation (SE-F) commutable des deux côtés est agencé sur l'arbre de sortie (24).

4. Boîte de vitesses à double embrayage selon l'une quelconque des revendications précédentes, **caractérisée en ce qu'**au moins deux des éléments de commutation (SE-A à SE-G) sont actionnables pour la commutation de tous les rapports de marche avant (1^{er} au 12^{ème} rapport).

5. Boîte de vitesses à double embrayage selon l'une quelconque des revendications précédentes, **caractérisée en ce que** dans la direction axiale du deuxième élément de commutation (SE-A) de la deuxième demi-boîte (B), une roue dentée libre côté entraînement (45), logée sur le deuxième arbre d'entrée (23), du huitième plan de roue (RE-8) est agencée sur l'un côté du deuxième élément de commutation (SE-A) et un arbre creux côté entraînement (41) logé coaxialement sur le deuxième arbre d'entrée (23), de la deuxième demi-boîte (B) est agencé de l'autre côté du deuxième élément de commutation (SE-A), et que la roue dentée libre (45) du huitième plan de roue (RE-8) et l'arbre creux côté entraînement (41) de la deuxième demi-boîte (B) peuvent être couplés de manière alternée avec le deuxième arbre d'entrée (23) par le biais du deuxième élément de commutation (SE-A), et que l'arbre creux côté entraînement (41) de la deuxième demi-boîte (B) porte au moins une roue dentée fixe (43) du septième plan de roue (RE-7).

6. Boîte de vitesses à double embrayage selon la revendication 5, **caractérisée en ce qu'**une roue dentée côté entraînement (39) du sixième plan de roue (RE-6) est logée librement sur l'arbre creux côté entraînement (41) de la deuxième demi-boîte (B), et que l'arbre creux côté entraînement (41) de la deuxième demi-boîte (B) présente un quatrième élément de commutation (SE-B), avec lequel la roue dentée côté entraînement (39) logée librement du sixième plan de roue (RE-6) peut être couplée avec l'arbre creux côté entraînement (41) de la deuxième demi-boîte (B).

7. Boîte de vitesses à double embrayage selon la revendication 6, **caractérisée en ce que** la roue dentée côté entraînement (37) du cinquième plan de roue (RE-5) commutable sur les deux demi-boîtes (A, B) peut être couplée avec la deuxième demi-boîte (B) au moyen du quatrième élément de commutation (SE-B).

8. Boîte de vitesses à double embrayage selon l'une quelconque des revendications précédentes, **caractérisée en ce que** les roues dentées côté sortie (28, 32) des premier et deuxième plans de roue (RE-1, RE-2) de la première demi-boîte (A) sont agencées solidaires en rotation sur un arbre creux côté sortie (29) de la première demi-boîte (A), qui est logé de manière rotative coaxialement sur l'arbre de sortie (24).

9. Boîte de vitesses à double embrayage selon la revendication 8, **caractérisée en ce que** l'arbre de sortie (24) présente un cinquième élément de commutation (SE-F), au moyen duquel l'arbre creux côté sortie (29) de la première demi-boîte (A) ou une roue dentée côté sortie (34) du troisième plan de roue (RE-3) peut être couplé avec l'arbre de sortie (24) de manière alternée dans la première demi-boîte (A).

10. Boîte de vitesses à double embrayage selon l'une quelconque des revendications précédentes, **caractérisée en ce que** les roues dentées côté sortie (42, 46) des septième et huitième plans de roue (RE-7, RE-8) de la deuxième demi-boîte (B) sont agencées solidaires en rotation sur un arbre creux côté sortie (44) de la deuxième demi-boîte (B), qui est logé de manière rotative coaxialement sur l'arbre de sortie (24).

11. Boîte de vitesses à double embrayage selon la revendication 10, **caractérisée en ce que** l'arbre de sortie (24) présente un sixième élément de commutation (SE-E), au moyen duquel l'arbre creux côté sortie (44) de la deuxième demi-boîte (B) peut être couplé avec l'arbre de sortie (24).
